# EUROPÄISCHE PATENTANMELDUNG

(11) **EP 4 603 731 A1**
(43) Veröffentlichungstag der Anmeldung: **20.08.2025**
(21) Anmeldenummer: 25151646.4
(22) Anmeldetag: 14.01.2025
(51) Int. Cl.: F16K 11/07, F16K 31/06, F16K 3/26

(54) **VENTILEINHEIT**

(30) Priorität: 16.02.2024 DE 102024104332
(71) Anmelder: Thomas Magnete GmbH, 57562 Herdorf (DE)
(72) Erfinder: Rolland, Thomas, 57580 Gebhardshain (DE)

(57) **Zusammenfassung**

Die Erfindung betrifft eine Ventileinheit (10) aufweisend einen Aktuator (12), ein Schieberelement (14), ein Hülsenelement (16), ein Federelement (18), wobei das Schieberelement (14) verlagerbar in dem Hülsenelement (16) angeordnet ist, wobei das Federelement (18) dazu eingerichtet ist, das Schieberelement (14) gegen den Aktuator (12) zu pressen, wobei der Aktuator (12) dazu eingerichtet ist, das Schieberelement (14) gegen das Federelement (18) um einen vorbestimmten Wert auszulenken, wobei das Schieberelement (14) eine erste Ausnehmung (20) und eine zweite Ausnehmung (22) aufweist, wobei die Ventileinheit (10) dazu eingerichtet ist, einen vorbestimmten Volumenstrom durch das Schieberelement (14) mittels der ersten Ausnehmung (20) und der zweiten Ausnehmung (22) bereitzustellen, wenn das Schieberelement (14) um den vorbestimmten Wert ausgelenkt ist

## Beschreibung

### Stand der Technik

Die vorliegende Erfindung betrifft eine Ventileinheit sowie ein Fahrzeug.

Derzeit bestehen eine Vielzahl an unterschiedlichen Lösungen zur Steuerung von Volumenströmen und/oder Fluidströmen im Fahrzeugbereich. Durch die zunehmende Anzahl an gezielten Ansteuerungen von Fluidströmen im Fahrzeugbereich und die erhöhten Qualitätsals auch Leistungsanforderungen steigt kontinuierlich der Bedarf an innovativen und robusten Methoden zur Volumenstrom-Steuerung.

Die stetige Gewichtsreduzierung im Fahrzeugbereich zur Verbrauchsverringerung sowie der zunehmende Wettbewerb sorgt für Kostendruck, so dass günstige und effiziente Komponente für Fahrzeuge stärker nachgefragt werden.

### Offenbarung der Erfindung

Die erfindungsgemäße Ventileinheit mit den Merkmalen des Anspruchs 1 weist gegenüber dem Bekannten den Vorteil auf, dass ein deutlich erhöhter Volumenstrom bereitgestellt werden kann, da durch die erste Ausnehmung und die zweite Ausnehmung ein Fluidfluss deutlich erhöht werden kann.

Ein weiterer Vorteil ist, dass lediglich das Schieberelement angepasst werden kann und dass alle weiteren Komponenten der Ventileinheit im Wesentlichen gleichbleiben. Somit reduziert sich das Potenzial von Fehlern, da gleiche Teile verwendet werden können. Weiter bevorzugt kann der benötigte Bauraum einer solchen Ventileinheit deutlich reduziert werden im Vergleich zu bisherigen Lösungen.

Dies wird erfindungsgemäß dadurch erreicht, dass die Ventileinheit einen Aktuator, ein Schieberelement, ein Hülsenelement und ein Federelement aufweist. Weiter ist das Schieberelement verlagerbar in dem Hülsenelement angeordnet, wobei das Federelement dazu eingerichtet ist, das Schieberelement gegen den Aktuator zu pressen, wobei der Aktuator dazu eingerichtet ist, das Schieberelement gegen das Federelement um einen vorbestimmten Wert auszulenken, wobei das Schieberelement eine erste Ausnehmung und eine zweite Ausnehmung aufweist, wobei die Ventileinheit dazu eingerichtet ist, einen vorbestimmten Volumenstrom durch das Schieberelement mittels der ersten Ausnehmung und der zweiten Ausnehmung bereitzustellen, wenn das Schieberelement um den vorbestimmten Wert ausgelenkt ist.

In anderen Worten kann bei einem im Wesentlichen gleichen Ventilhub durch das Vorsehen zweier Ausnehmungen bzw. zwei paralleler Querschnitte der Volumenfluss durch die Ventileinheit deutlich erhöht werden, wobei gleichzeitig zumindest ein Anschluss an der Austrittsseite als auch zumindest ein Anschluss an der Eintrittsseite der Ventileinheit vorliegen kann. Der Begriff des Aktuators ist breit zu verstehen und umschließt somit bspw. magnetische, mechanische oder ähnliche Aktuatoren. Somit ergibt sich eine Art Parallelschaltung der beiden Ausnehmungen zum Steuern des Volumenstroms. Beispielsweise kann es sich bei dem Aktuator um einen Magnetaktuator oder ähnliches handeln, welcher das Schieberelement auslenken bzw. steuern kann. Durch die Steuerung bzw. die Auslenkung des Schieberelements um einen vorbestimmten Wert kann der Ventilhub von beispielsweise 3 mm eingestellt werden. Weiter bevorzugt ist das Schieberelement mittels erster und zweiter Ausnehmung dazu in der Lage, einen vorbestimmten Volumenstrom durch die Ventileinheit einzustellen, wenn das Schieberelement um den vorbestimmten Wert ausgelenkt wurde. Weiter bevorzugt kann die Ventileinheit mit dem Schieberelement ferner als Schaltventil und/oder als Proportionalventil genutzt werden.

Die Unteransprüche zeigen bevorzugte Weiterbildungen der Erfindung.

Bevorzugt weist das Hülsenelement eine dritte Ausnehmung und eine vierte Ausnehmung auf, wobei die erste Ausnehmung und die zweite Ausnehmung des Schieberelements und die dritte Ausnehmung und die vierte Ausnehmung des Hülsenelements im Wesentlichen sich überlappen, wenn das Schieberelement um den vorbestimmten Wert ausgelenkt ist.

Ein Vorteil dieser Ausführungsform ist, dass ein Volumenfluss durch die Ventileinheit bereitgestellt werden kann, wobei die dritte Ausnehmung und die vierte Ausnehmung insbesondere derart ausgebildet sind, dass sie einen Anschluss für die Ventileinheit ausbilden können. Im Wesentlichen kann in diesem Zusammenhang insbesondere eine Lageabweichung der ersten Ausnehmung zur dritten Ausnehmung und/oder der zweiten Ausnehmung zur vierten Ausnehmung von bis 50mm bedeuten.

Weiter bevorzugt umfasst die erste Ausnehmung zumindest einen ersten Schlitz in einer Wand des Schieberelements, wobei die zweite Ausnehmung zumindest einen zweiten Schlitz in der Wand des Schieberelements umfasst, wobei der erste Schlitz und der zweite Schlitz im Wesentlichen parallel zueinander angeordnet sind, und dazu eingerichtet sind, den vorbestimmten Volumenstrom bereitzustellen.

Ein Vorteil dieser Ausführungsform ist, dass die Herstellbarkeit des Schieberelements durch die im Wesentlichen parallele Schlitze deutlich vereinfacht werden kann, um somit die

Herstellkosten reduzieren zu können. Im Wesentlichen parallel bedeutet insbesondere eine Abweichung von ± 10°, insbesondere fertigungsbedingte Toleranzen.

Weiter bevorzugt umfasst die erste Ausnehmung zumindest einen dritten Schlitz in der Wand des Schieberelements, wobei die zweite Ausnehmung zumindest einen vierten Schlitz in der Wand des Schieberelements umfasst.

Ein Vorteil dieser Ausführungsform ist, dass durch die Vorsehung von zwei Schlitzen jeweils in der ersten Ausnehmung und der zweiten Ausnehmung die beiden Ausnehmungen mittels eines Steges verbunden werden können, um somit die Stabilität des Schieberelements weiter erhöhen zu können.

Weiter bevorzugt umfasst eine Querschnittsfläche zumindest den ersten Schlitz, den zweiten Schlitz, den dritten Schlitz und den vierten Schlitz und ist dazu eingerichtet, den vorbestimmen Volumenstrom bereitzustellen.

Ein Vorteil dieser Ausführungsform ist, dass durch die gezielte Anordnung der vier Schlitze zu einer Querschnittsfläche der Volumenstrom weniger turbulent sein kann, um somit die Effizienz der Ventileinheit weiter steigern zu können.

Weiter bevorzugt weist die erste Ausnehmung eine erste Vielzahl von Bohrungen auf, und die zweite Ausnehmung eine zweite Vielzahl an Bohrungen auf, wobei die erste Vielzahl an Bohrungen und die zweite Vielzahl an Bohrungen dazu eingerichtet sind, den vorbestimmten Volumenstrom bereitzustellen.

Ein Vorteil dieser Ausführungsform ist, dass durch die Anordnung einer Vielzahl von ersten Bohrungen und zweiten Bohrungen zum Ausbilden der ersten Ausnehmung und der zweiten Ausnehmung die Torsionssteifigkeit des Schieberelementes weiter erhöht werden kann.

Vorzugsweise weist das Hülsenelement einen ersten Anschluss und einen zweiten Anschluss auf, wobei das Schieberelement dazu eingerichtet ist, einen Fluidstrom zwischen dem ersten Anschluss und dem zweiten Anschluss zu reduzieren und/oder zu stoppen, wenn das Schieberelement frei von einer Auslenkung ist.

Ein Vorteil dieser Ausführungsform ist, dass unterschiedliche Komponenten wie beispielsweise ein Arbeitsanschluss, ein Tank oder ähnliches an das erste Anschlusselement und/oder das zweite Anschlusselement angeordnet werden kann, um somit einen Fluidstrom zwischen diesen beiden Komponenten steuern zu können.

Weiter bevorzugt ist der Aktuator dazu eingerichtet, eine Magnetkraft auszubilden, um das Schieberelement gegen das Federelement um den vorbestimmten Wert auszulenken.

Ein Vorteil dieser Ausführungsform ist, dass durch die Magnetkraft bzw. den Magnetaktuator eine besonders verschleißarme Form der Auslenkung bereitgestellt werden kann.

Weiter bevorzugt weist das Schieberelement eine Vielzahl von Ausnehmungen auf, um den vorbestimmten Volumenstrom bereitzustellen.

Ein Vorteil dieser Ausführungsform ist, dass durch die Anpassung der Vielzahl von Ausnehmungen gezielt ein vorbestimmter Volumenstrom definiert werden kann.

Ein weiterer Aspekt der Erfindung betrifft ein Fahrzeug, welches eine Ventileinheit wie vorstehend und nachfolgend beschrieben aufweist.

### Zeichnungen

Nachfolgend werden Ausführungsbeispiele der Erfindung unter Bezugnahme auf die begleitenden Zeichnungen im Detail beschrieben ist. In der Zeichnung ist:
Fig. 1 und 2 eine Ventileinheit gemäß einer Ausführungsform,
Fig. 3 ein Fahrzeug gemäß einer Ausführungsform.

### Ausführungsformen der Erfindung

Bevorzugt sind alle gleichen Elemente, Einheiten und/oder Systeme in allen Figuren mit den gleichen Bezugszeichen versehen.

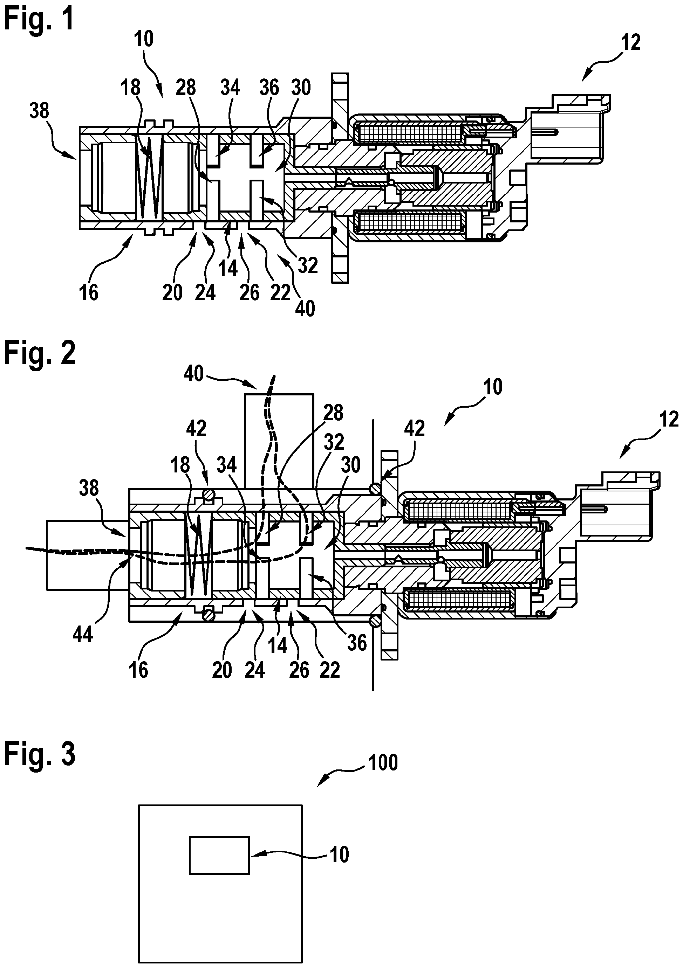

Fig. 1 zeigt eine Ventileinheit 10 gemäß einer Ausführungsform. Die Ventileinheit 10 weist einen Aktuator 12, ein Schieberelement 14, ein Hülsenelement 16 und ein Federelement 18 auf. Bevorzugt ist das Schieberelement 14 verlagerbar in dem Hülsenelement 16 angeordnet, wobei das Federelement 18 dazu eingerichtet ist, das Schieberelement 14 gegen den Aktuator 12 zu pressen, wobei der Aktuator 12 dazu eingerichtet ist, das Schieberelement 14 gegen das Federelement 18 um einen vorbestimmten Wert auszulenken, wobei das Schieberelement 14 eine erste Ausnehmung 20 und eine zweite Ausnehmung 22 aufweist, wobei die Ventileinheit 10 dazu eingerichtet ist, einen vorbestimmten Volumenstrom durch das Schieberelement 14 mittels der ersten Ausnehmung 20 und der zweiten Ausnehmung 22 bereitzustellen, wenn das Schieberelement 14 um den vorbestimmten Wert ausgelenkt ist.

Weiter bevorzugt weist das Hülsenelement 16 eine dritte Ausnehmung 24 und eine vierte Ausnehmung 26 auf, welche sich mit der ersten Ausnehmung 20 und der zweite Ausnehmung 22 im Wesentlichen überlappen können. Weiter bevorzugt weist eine Wand 30 des Schieberelements 14 einen erste Schlitz 28 auf, welcher durch die erste Ausnehmung 20 umfasst ein kann. Bevorzugt kann die zweite Ausnehmung 22 einen zweiten Schlitz 32 in der Wand 30 umfassen. Weiter bevorzugt sind der erste Schlitz 28 und der zweite Schlitz 32 im Wesentlichen parallel zueinander angeordnet. Vorzugsweise kann die erste Ausnehmung 20 zusätzlich zum ersten Schlitz 28 einen dritten Schlitz 34 aufweisen und die zweite Ausnehmung 22 zusätzlich zum zweiten Schlitz 32 einen vierten Schlitz 36 aufweisen. Weiter bevorzugt kann der erste Schlitz 28, der zweite Schlitz 32, der dritte Schlitz 34 und der vierte Schlitz 36 eine Querschnittsfläche ausbilden, welche dazu eingerichtet ist, den vorbestimmten Volumenstrom bereitzustellen. Weiter bevorzugt umfasst das Hülsenelement 16 einen ersten Anschluss 38 und einen zweiten Anschluss 40. Beispielsweise kann der erste Anschluss 38 mit einem Tank verbunden werden und der zweite Anschluss mit einem Nutzer oder ähnlichem.

Fig. 2 zeigt eine Ventileinheit 10 gemäß einer Ausführungsform. Die Ventileinheit 10 umfasst bevorzugt ein Schieberelement 14 mit einem ersten Schlitz 28, einem zweiten Schlitz 32, einen dritten Schlitz und einen vierten Schlitz 36. Der erste Schlitz 28 und der dritte Schlitz 34 können insbesondere die erste Ausnehmung 20 ausbilden, wobei der zweite Schlitz 32 und der vierte Schlitz 36 bevorzugt die zweite Ausnehmung 22 ausbilden können. Wie in der Fig. 2 dargestellt ist, kann von einem ersten Anschluss 38 ein Fluidstrom 44 durch die Ventileinheit 10, insbesondere durch das Hülsenelement 16 und das Schieberelement 14 mittels der Verlagerung des Schieberelementes 14 mit der ersten Ausnehmung 20 und der zweiten Ausnehmung 22 gesteuert werden hin zu einem zweiten Anschluss 40. Bevorzugt können dabei insbesondere der erste Anschluss 38 und der zweite Anschluss 40 mittels eines Dichtrings 42 oder ähnlichem voneinander getrennt sein.

Fig. 3 zeigt ein Fahrzeug 100 gemäß einer Ausführungsform. Das Fahrzeug 100 weist bevorzugt eine Ventileinheit 10 wie voranstehend und nachfolgend beschrieben auf.

### Bezugszeichenliste

- 10 -: Ventileinheit
- 12 -: Aktuator
- 14 -: Schieberelement
- 16 -: Hülsenelement
- 18 -: Federelement
- 20 -: erste Ausnehmung
- 22 -: zweite Ausnehmung
- 24 -: dritte Ausnehmung
- 26 -: vierte Ausnehmung
- 28 -: ersten Schlitz
- 30 -: Wand
- 32 -: zweiten Schlitz
- 34 -: dritten Schlitz
- 36 -: vierten Schlitz
- 38 -: ersten Anschluss
- 40 -: zweiten Anschluss
- 42 -: Dichtring
- 44 -: Fluidstrom
- 100 -: Fahrzeug

## Patentansprüche

1. Ventileinheit (10) aufweisend:
- einen Aktuator (12),
- ein Schieberelement (14),
- ein Hülsenelement (16),
- ein Federelement (18),
wobei das Schieberelement (14) verlagerbar in dem Hülsenelement (16) angeordnet ist, wobei das Federelement (18) dazu eingerichtet ist, das Schieberelement (14) gegen den Aktuator (12) zu pressen,
wobei der Aktuator (12) dazu eingerichtet ist, das Schieberelement (14) gegen das Federelement (18) um einen vorbestimmten Wert auszulenken,
wobei das Schieberelement (14) eine erste Ausnehmung (20) und eine zweite Ausnehmung (22) aufweist,
wobei die Ventileinheit (10) dazu eingerichtet ist, einen vorbestimmten Volumenstrom durch das Schieberelement (14) mittels der ersten Ausnehmung (20) und der zweiten Ausnehmung (22) bereitzustellen, wenn das Schieberelement (14) um den vorbestimmten Wert ausgelenkt ist.

2. Ventileinheit (10) nach Anspruch 1,
wobei das Hülsenelement (16) eine dritte Ausnehmung (24) und eine vierte Ausnehmung (26) aufweist,
wobei die erste Ausnehmung (20) und die zweite Ausnehmung (22) des Schieberelements (14) und
die dritte Ausnehmung (24) und die vierte Ausnehmung (26) des Hülsenelements (16) sich im Wesentlichen überlappen, wenn das Schieberelement (14) um den vorbestimmten Wert ausgelenkt ist.

3. Ventileinheit (10) nach einem der vorhergehenden Ansprüche,
wobei die erste Ausnehmung (20) zumeist einen ersten Schlitz (28) in einer Wand (30) des Schieberelements (14) umfasst,
wobei die zweite Ausnehmung (22) zumindest einen zweiten Schlitz (32) in der Wand (30) des Schieberelements (14) umfasst,
wobei der erste Schlitz (28) und der zweite Schlitz (32) im Wesentlichen parallel zueinander angeordnet sind und dazu eingerichtet sind, den vorbestimmten Volumenfluss bereitzustellen.

4. Ventileinheit (10) nach Anspruch 3,
wobei die erste Ausnehmung (20) zumindest einen dritten Schlitz (34) in der Wand (30) des Schieberelements (14) umfasst,
wobei die zweite Ausnehmung (22) zumindest einen vierten Schlitz (36) in der Wand (30) des Schieberelements (14) umfasst.

5. Ventileinheit (10) nach einem der Ansprüche 3 bis 5,
wobei eine Querschnittsfläche zumindest den ersten Schlitz (28), den zweiten Schlitz (32), den dritten Schlitz (34) und den vierten Schlitz (36) umfasst und dazu eingerichtet ist, den vorbestimmten Volumenstrom bereitzustellen.

6. Ventileinheit (10) nach einem der vorhergehenden Ansprüche,
wobei die erste Ausnehmung (20) eine erste Vielzahl von Bohrungen aufweist und die zweite Ausnehmung (22) eine zweite Vielzahl von Bohrungen aufweist,
wobei die erste Vielzahl von Bohrungen und die zweite Vielzahl von Bohrungen dazu eingerichtet sind, den vorbestimmten Volumenstrom bereitzustellen.

7. Ventileinheit (10) nach einem der vorhergehenden Ansprüche,
wobei das Hülsenelement (16) einen ersten Anschluss (38) und einen zweiten Anschluss (40) aufweist,
wobei das Schieberelement (14) dazu eingerichtet ist, einen Fluidstrom zwischen dem ersten Anschluss (38) und dem zweiten Anschluss (40) zu reduzieren und/oder zu stoppen, wenn das Schieberelement (14) frei von einer Auslenkung ist.

8. Ventileinheit (10) nach einem der vorhergehenden Ansprüche,
wobei der Aktuator (12) dazu eingerichtet ist, eine Magnetkraft auszubilden, um das Schieberelement (14) gegen das Federelement (18) um den vorbestimmten Wert auszulenken.

9. Ventileinheit (10) nach einem der vorhergehenden Ansprüche,
wobei das Schieberelement (14) eine Vielzahl von Ausnehmungen aufweist, um den vorbestimmten Volumenstrom bereitzustellen.

10. Fahrzeug (100) aufweisend eine Ventileinheit (10) nach einem der vorhergehenden Ansprüche.
